# EUROPEAN PATENT APPLICATION

(11) **EP 4 393 875 A1**
(43) Date of publication of application: **03.07.2024**
(21) Application number: 22937121.6
(22) Date of filing: 05.08.2022
(51) Int. Cl.: C01B 25/45, C01B 32/15, B82Y 40/00, B82Y 30/00

(54) **HYDROTHERMAL SYNTHESIS METHOD FOR NANO LITHIUM MANGANESE IRON PHOSPHATE**

(30) Priority: 12.04.2022 CN 202210381172
(71) Applicant: Shenzhen Warrant New Energy Co., Ltd., Shenzhen, Guangdong 518000 (CN)
(72) Inventor: TIAN, Yihong, Shenzhen, Guangdong 518000 (CN)
(74) Representative: Isern Patentes y Marcas S.L.
(86) International application number: PCT/CN2022/110407
(87) International publication number: WO 2023/197483

(57) **Abstract**

The present invention relates to the technical field of preparation of lithium battery raw materials, especially to a hydrothermal synthesis method for nano lithium iron manganese phosphate, including the following steps: mixing lithium phosphate with water, adding them to autoclave 1, heating from room temperature to 140-150°C while stirring to obtain slurry A; dissolving ferrous sulfate and manganese sulfate in water, adding them to autoclave 2, and heating to 140-150°C to obtain slurry B; heating autoclave 3 to 140-150°C, adding slurry A and slurry B in concurrent flow to autoclave 3, stirring, maintaining reaction at 140-150°C for 2-4 hours; stopping heating, cooling, opening a discharge valve, filtering product, washing filter cake, drying in vacuum to obtain lithium iron manganese phosphate powder, and coating with carbon. High-temperature mixing of reaction raw materials creates a true molecular mixing reaction starting condition. Prepared material particles are uniform with a three-dimensional scale reaching a nano scale, which is conducive to shortening lithium ion diffusion paths, fundamentally improving electrochemical performance of the material and prolonging its cycle life.

## Description

The present disclosure is proposed upon and claims priority of Chinese Patent Application No. 202210381172.2, filed on April 12, 2022, which is incorporated herein by reference in its entirety.

### Field of the Invention

The present invention relates to the technical field of the preparation of lithium-ion battery raw materials, in particular to a hydrothermal synthesis method for nano lithium iron manganese phosphate.

### Background of the Invention

Lithium iron phosphate with an olivine structure has received great attention in the field of secondary lithium-ion batteries due to its safety, low cost, and environmental friendliness. Due to its poor electronic conductivity and limited one-dimensional ion transport channels, its ionic conductivity is also poor, resulting in ineffective electrochemical performance of such materials. In addition, its discharge voltage plateau is around 3.45 V, so its energy density is relatively low. A phosphate material (LiFeₓMn₁₋ₓPO₄) with an olivine structure can still be obtained by replacing some iron atoms with manganese atoms to prepare a lithium iron manganese phosphate material. The material presents two discharge plateaus of 3.45 V and 4.0 V. The replacement of manganese theoretically increases the energy density of the material. However, the conductivity and ion diffusion performance of the material are further reduced, which affects its electrochemical performance. To solve the above problem, decrease in particle size to shorten ion diffusion distance and carbon coating to improve electronic conductivity are two most effective methods. Many studies have shown that prepare particle size of a material as a nano scale can achieve an approximately theoretical capacity and improve rate performance and low-temperature performance.

In existing technologies, technical routes for synthesizing lithium iron manganese phosphate are mainly divided into two categories. One is a solid-phase method, which is based on the basic principle of solid-phase synthesis reaction occurring between solid reactant particles through surface diffusion at a high temperature, but the control on product particles and the batch stability of products need to be improved. The other is a liquid-phase method, including a hydrothermal method using water as a reaction medium and a solvothermal method using an organic solvent as a reaction medium. Compared with the solid-phase method, the liquid-phase synthesis has the advantages of uniform phase, easy control on particle size, and availability of nano-scale particles. In a solvothermal synthesis technology under the liquid-phase synthesis method, the use of an organic solvent as a medium has good effects on reducing pressure in a reactor and controlling the particle size of a product. For example, the patent CN104582878A uses triethanolamine as a solvent, the patent CN111777051A uses ethylene glycol as a solvent and a surfactant, the patent CN104583130A uses glycerol as a solvent, and the patent CN104918888A uses various alcohols as solvents, to synthesize nano-scale products. However, the use of an organic solvent arouses environmental issues in large-scale industrial applications, such as explosion prevention in a production field and increase in production cost from the treatment of organic wastewater generated in a process. The above issues are not prominent in the hydrothermal synthesis technology using water as a medium. In existing hydrothermal synthesis technologies, methods for controlling a particle size include: (1) using a surfactant, such as the technology in ZL200710058352.2; and (2) controlling process parameters such as reaction temperature and pH value, such as the technology in ZL202010031395.3, where the both can achieve an objective of decreasing a particle size. However, the particle size of a material reaches around 100 nanometers only in one dimension, the industry still needs to further decrease the particle size, and the material in form of flaky is not conducive to increasing a bulk density. An existing hydrothermal preparation technical route for lithium iron manganese phosphate mainly includes steps of dissolving soluble ferrous salt and manganese salt, phosphoric acid and lithium hydroxide in a proportion, mixing them in a reactor, and heating the mixture to 120-374°C (critical temperature of water), where lithium iron manganese phosphate crystals can be prepared within a wide temperature range, with different morphologies and particle sizes. Generally, the higher the reaction temperature is, the smaller the particles of the prepared crystals are, and the better the electrochemical performance is. In order to obtain small lithium iron manganese phosphate particles, a higher reaction temperature is required and supplemented with a surfactant and an organic solvent to achieve an objective of refining particles. The disadvantage is that the self-generated pressure of the reaction system at the high reaction temperature is high, which leads to the problems of high device investment and difficult operation control. In addition, the surfactant remains in the mother liquor, so a lot of foam that is difficult to control is produced in the evaporation process of the mother liquor, and wastewater containing organic substances is produced in the production process to increase subsequent treatment costs. In fact, the increase in reaction temperature and the use of a surfactant have not fundamentally addressed the control on particle size in the crystallization process. Outwardly, the raw materials involved in the hydrothermal reaction are first dissolved and then added to the reactor, and the raw materials are mixed at a molecular level, but in fact, at room temperature or slightly above room temperature, after the reaction raw material solution is mixed, a new precipitate mixture is immediately formed, where the reaction is as follows:

LiOH+H₃PO₄+FeSO₄→Li₃PO₄↓+Fe₃(PO₄)₂↓+Li₂SO₄

As the temperature increases, LiₐPO₄↓ and Fe₃(PO₄)₂↓ dissolve successively to release Li+, Fe²⁺ and PO₄³⁻, which then recombine to form lithium iron phosphate. The mechanism is the same when iron is partially replaced with manganese. In this process, if the actual objective of molecular level mixing is not achieved, a large number of crystal nuclei cannot be formed in a short time. Therefore, the particle size is difficult to decrease due to the lack of crystal nuclei.

The above problems need to be solved.

### Summary of the Invention

In order to solve the above problems, the present invention provides a hydrothermal synthesis method for nano lithium iron manganese phosphate. Nano lithium iron manganese phosphate particles are formed by pre-heating a reactant raw material solution to a temperature higher than the temperature at which lithium phosphate (produced by mixing lithium hydroxide with phosphoric acid or from a mother liquor) begins to dissolve, and then mixing the raw material solution with ferrous sulfate (or some iron elements are replaced by manganese) at a high temperature, where the raw materials are all in liquid phase in the mixing process, and the mixing is true molecular level mixing that can instantly generate a large number of crystal nuclei. The present invention adopts the following technical solution.

A hydrothermal synthesis method for nano lithium iron manganese phosphate includes the following steps:
(1) mixing lithium phosphate with water, adding the mixture to an autoclave 1, scavenging the air in a dead volume of the autoclave with inert gas, sealing the autoclave, heating the mixture from room temperature to 140-150°C while stirring, and preserving the heat to obtain slurry A for later use;
(2) dissolving ferrous sulfate and manganese sulfate in water, adding the solution to an autoclave 2, scavenging the air in a dead volume of the autoclave with inert gas, sealing the autoclave, heating the solution to 140-150°C, and preserving the heat to obtain slurry B for later use;
(3) heating an autoclave 3 to 140-150°C, opening a feed valve and a safety exhaust valve, adding the slurry A and the slurry B in concurrent flow to the autoclave 3, stirring, and maintaining a reaction at 140-150°C for 2-4 hours;
(4) preserving the heat at 140-150°C for 2-4 hours, then stopping heating, cooling the autoclave to below 80°C, opening a discharge valve, filtering the product to obtain a filter cake and a mother liquor, washing the filter cake, and drying the filter cake in vacuum to obtain lithium iron manganese phosphate powder; and
(5) evenly mixing the lithium iron manganese phosphate powder obtained in step (4) with a carbon source, and calcining at 700°C for 4 hours under inert gas protection to obtain carbon-coated lithium iron manganese phosphate.

Further, a molar ratio of the materials added in step (3) is Li: M (Fe+Mn): P = 3.0: 1.0: 1.0; and a combined concentration of iron and manganese elements after adding is 0.3-0.5 mol/L.

Further, the filtered mother liquor and the washing water after washing the filter cake in step (4) are combined, evaporated and concentrated to recover lithium phosphate.

Further, the washed filter cake in step (4) is dried in vacuum at 110-120°C for 12 hours.

Further, the ferrous sulfate and the manganese sulfate are finished crystals or pre-crystallization liquids of ferrous sulfate and manganese sulfate; and the lithium phosphate is obtained by neutralization of lithium hydroxide and phosphoric acid, or by recovery from the mother liquor.

Further, the lithium iron manganese phosphate powder is mixed with the carbon source in a mass ratio of 100: (15-20).

Further, the carbon source is glucose.

Compared with the existing technologies, the present invention has the following beneficial effects:
(1) The hydrothermal synthesis method for nano lithium iron manganese phosphate of the present invention uses high-temperature mixing of reaction raw materials to create a true molecular level mixing reaction starting condition, so that the prepared material particles are uniform, with a morphology that changes from a flake shape of ordinary hydrothermal products to a spherical shape, and a three-dimensional scale that can reach a nano scale, which are conducive to shortening lithium ion diffusion paths, facilitating contact between positive electrode active material particles after addition of an electrode material to an electrode plate, fundamentally improving the electrochemical performance of the material and prolonging its cycle life.
(2) The hydrothermal synthesis method for nano lithium iron manganese phosphate of the present invention obtains uniform nano-scale product particles by controlling the temperature of the reaction materials to change the number of generated crystal nuclei and to ultimately control the particle size, with mild process conditions and easy operation.
(3) By using the nano lithium iron manganese phosphate obtained by the hydrothermal synthesis method of the present invention as a positive electrode material for a lithium-ion battery, the prepared lithium-ion battery has high-rate discharge performance, and its low-temperature discharge performance is effectively improved.

### Brief Description of the Drawings

In order to describe the technical solutions in embodiments of the present invention or in the prior art more clearly, the accompanying drawings which need to be used in the description of the embodiments or the prior art will be simply introduced below. Obviously, the accompanying drawings in the following description show merely some embodiments of the present invention, and those of ordinary skill in the art may still derive other drawings according to the accompanying drawings without any creative efforts.
FIG. 1 is a morphology diagram of lithium iron manganese phosphate prepared in Example 1 of the present invention;
FIG. 2 is a morphology diagram of lithium iron manganese phosphate prepared in Comparative Example 1 of the present invention; and
FIG. 3 is a curve diagram of a battery prepared in Example 1 of the present invention, charged and discharged at 25°C and 0.2C.

### Detailed Description of the Embodiments

The technical solutions in the embodiments of the present invention will be clearly and completely described below in conjunction with the embodiments of the present invention. Apparently, the described embodiments are only some, not all of the embodiments of the present invention. All other embodiments obtained by those of ordinary skill in the art based on the embodiments of the present invention without any creative effort shall fall within the scope of protection of the present invention.

### Example 1

A hydrothermal synthesis method for nano lithium iron manganese phosphate included the following steps:
Step 1: Hydrothermal synthesis reaction
   (1) 6 mol of lithium hydroxide monohydrate was dissolved in water to obtain 2 L of solution, the solution was added to an autoclave 1, about 0.15 L of 2 mol phosphoric acid was added while stirring, then the air in a dead volume of the autoclave was scavenged with inert gas, the autoclave was sealed, the solution was heated from room temperature to 150°C while stirring, and the heat was preserved to obtain slurry A for later use;
   (2) 1 mol of ferrous sulfate heptahydrate and 1 mol of manganese sulfate dihydrate were dissolved in water, the solution was diluted to 2 L and added to an autoclave 2, the air in a dead volume of the autoclave was scavenged with inert gas, the autoclave was sealed, the solution was heated to 150°C while stirring, and the heat was preserved to obtain slurry B for later use;
   (3) An autoclave 3 was heated to 150°C, a feed valve and a safety exhaust valve were opened, the slurry A and the slurry B were added in concurrent flow to the autoclave 3 while strong stirring, and a reaction was maintained at 150°C for 2 hours; a molar ratio of the added materials was Li: M(Fe+Mn): P = 3.0: 1.0: 1.0; after the addition of the materials, a combined concentration of iron and manganese elements in the solution was about 0.5 mol/L;
Step 2: Filtration, washing, and drying of a product
   (4) After the above reaction was completed, the autoclave was cooled to 80°C with cooling oil through a coil, a vent valve and a discharge valve were opened, the product was filtered to obtain a filter cake and a mother liquor, the filter cake was washed three times, and the filter cake was dried in vacuum at 120°C to a constant weight to obtain LiFe_{0.5}Mn_{0.5}PO₄ pink-white powder; the mother liquor and the washing water were recovered into a recovery tank, evaporated and crystallized to recover lithium phosphate.
Step 3: Carbon coating treatment

The pink-white powder prepared in step 2 and glucose were mixed in a mass ratio of 100: 15 and calcined at 700°C under nitrogen protection for 4 hours, to obtain a carbon-coated lithium iron manganese phosphate (LiFe_{0.5}Mn_{0.5}PO₄/C) product.

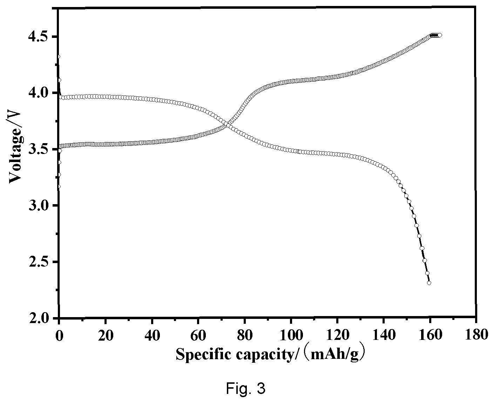

The prepared lithium iron manganese phosphate/carbon was used as a positive electrode material for a battery to test the charging and discharging performance of the battery. Specifically, the lithium iron manganese phosphate/carbon obtained above, acetylene black, and 60% polytetrafluoroethylene emulsion were mixed in a mass ratio of 7: 2: 1 and rolled into a plate having a thickness of 0.10-0.15 mm, and the plate was pressed together with an aluminum foil and dried in vacuum at 120°C for 12 hours to obtain a positive electrode of a battery. A metal lithium plate as a negative electrode, 1M LiPF₆ solution as an electrolyte, and cell gard2300 as a separator were assembled with the positive electrode into a button battery, and the button battery was charged and discharged at 25°C and rates of 0.2C and 1C, and discharged at -20°C and 0.2C, where a voltage range for charging and discharging was 4.5-2.3 V. The test results were shown in Table 1 and FIG. 3.

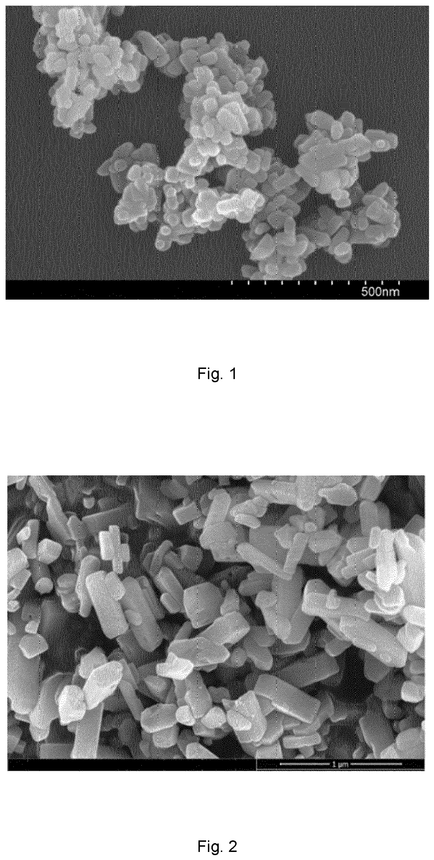

The morphology of the product produced in this example was showed in FIG. 1, which showed that the particles of the material were uniform, with a spherical morphology and a three-dimensional scale reaching a nano scale, which were conducive to shortening lithium ion diffusion paths and facilitating contact between positive electrode active material particles after an electrode material was processed into an electrode plate.

### Example 2

The lithium phosphate in the slurry A in Example 1 was replaced with lithium phosphate recovered from the mother liquor, and other preparation steps were the same as Example 1.

Electrochemical performance test results were shown in Table 1.

### Example 3

The temperatures of the slurry A, the slurry B and the final hydrothermal synthesis reaction in Example 1 were set to 140°C, the reaction time was set to 4 hours, and other preparation steps were the same as Example 1.Electrochemical performance test results were shown in Table 1.

### Comparative Example 1

A hydrothermal synthesis reaction was performed by a conventional adding technology, and starting temperatures of all reaction raw materials were room temperature.

6 mol of lithium hydroxide monohydrate was dissolved in water to obtain 2 L of solution, and about 0.15 L of 2 mol phosphoric acid was added while stirring, to obtain lithium phosphate slurry as slurry A.

1 mol of ferrous sulfate heptahydrate and 1 mol of manganese sulfate dihydrate were dissolved in water, and the solution was diluted to 2 L to obtain slurry B.

The slurry A was added to a 10L autoclave, the air in a dead volume of the autoclave was scavenged with inert gas, the slurry B was added while strong stirring, and then the autoclave was sealed. The heating rate was set to 4°C/min, the reaction temperature was 150°C, and the reaction time was 2 hours. Other steps were the same as in Example 1.

Electrochemical performance test results were shown in Table 1.

The morphology of the product obtained in the comparative example was showed in FIG. 2. The reaction raw materials were mixed at room temperature, the reaction began in the subsequent heating process before the temperature reached the set reaction temperature to generate an intermediate product - precipitated lithium phosphate and vivianite iron manganese phosphate first, and the intermediate product began to dissolve at approximately 120°C to generate a target product lithium iron manganese phosphate. The temperature rose from 120°C to 150°C for about 10 minutes (a phenomenon of temperature stagnation occurred midway due to dissolution heat absorption), and the release of nucleation ions relied on the dissolution of the intermediate product. Therefore, the nucleation ions were insufficient, and the particles of the product were relatively large. It can be foreseen that if the volume of the autoclave increased, such as from 10 L to 1 M³, by 100 times, its heat transfer surface area was theoretically enlarged by only 21 times, resulting in a negative effect manifested by a slower heating rate after the autoclave was enlarged, so that the reaction system retained a longer time in the low temperature stage. The lithium iron manganese phosphate formed in the low temperature stage had ion dislocation problems in crystal structure, poor particle uniformity, larger particle size, and worse performance. In fact, the production type autoclave was often larger, and even if coils can be added to increase the heat transfer area, the negative effect of enlargement cannot be avoided.

**Table 1 Electrochemical performance test results**

| | 0.2C specific capacity/mAhg⁻¹ | 1C specific capacity/mAhg⁻¹ | 0.2C specific capacity at - 20°C/mAhg⁻¹ |
|---|---|---|---|
| Example 1 | 159.7 | 149.1 | 132.1 |
| Example 2 | 159.6 | 148.5 | 131.8 |
| Example 3 | 158.9 | 147.7 | 129.7 |
| Comparative Example 1 | 148.5 | 138.8 | 114.6 |

It can be seen from the results in Table 1 and FIG. 3 that the high-temperature addition created a condition for molecular level mixing between the reaction materials, and under such condition, a large number of crystal nuclei were instantly generated, and a large number of free crystallization ions appeared in the reaction system, thereby reversing the state of insufficient crystallization ions caused by solid precursors in previous technologies. Meanwhile, in the present invention, directional growth trend of crystals was replaced by rapid growth of the crystals, a large number of crystal nuclei grew rapidly, and the particles of the final product were fine, with high sphericity, which was beneficial to increasing the compaction density of an electrode and exerting an electrochemical capacity. It can be seen from the data in the examples and the comparative example that the lithium iron manganese phosphate material exhibited excellent electrochemical performance under optimized conditions of the present invention. In addition, the preparation method of the present invention is simple, economical, mild in process conditions, and easy to operate, solves negative effects of device enlargement in conventional technologies, and is suitable for industrial large-scale production applications.

The present invention is further described above by virtue of specific examples, but it should be appreciated that the specific description here should not be understood as limitations to the essence and scope of the present invention. Various modifications made to the above examples by those of ordinary skill in the art after reading the description shall fall within the protection scope of the present invention.

## Claims

1. A hydrothermal synthesis method for nano lithium iron manganese phosphate, **characterized in that** comprising the following steps:
(1) mixing lithium phosphate with water, adding the mixture to an autoclave 1, scavenging the air in a dead volume of the autoclave with inert gas, sealing the autoclave, heating the mixture from room temperature to 140-150°C while stirring, and preserving the heat to obtain slurry A for later use;
(2) dissolving ferrous sulfate and manganese sulfate in water, adding the solution to an autoclave 2, scavenging the air in a dead volume of the autoclave with inert gas, sealing the autoclave, heating the solution to 140-150°C, and preserving the heat to obtain slurry B for later use;
(3) heating an autoclave 3 to 140-150°C, opening a feed valve and a safety exhaust valve, adding the slurry A and the slurry B in concurrent flow to the autoclave 3, stirring, and maintaining a reaction at 140-150°C for 2-4 hours;
(4) preserving the heat at 140-150°C for 2-4 hours, then stopping heating, cooling the autoclave to below 80°C, opening a discharge valve, filtering the product to obtain a filter cake and a mother liquor, washing the filter cake, and drying the filter cake in vacuum to obtain lithium iron manganese phosphate powder; and
(5) evenly mixing the lithium iron manganese phosphate powder obtained in step (4) with a carbon source, and calcining at 700°C for 4 hours under inert gas protection to obtain carbon-coated lithium iron manganese phosphate.

2. The hydrothermal synthesis method for nano lithium iron manganese phosphate according to claim 1, **characterized in that** a molar ratio of the materials added in step (3) is Li: M(Fe+Mn): P = 3.0: 1.0: 1.0; and a combined concentration of iron and manganese elements after adding is 0.3-0.5 mol/L.

3. The hydrothermal synthesis method for nano lithium iron manganese phosphate according to claim 1, **characterized in that** the filtered mother liquor and the washing water after washing the filter cake in step (4) are combined, evaporated and concentrated to recover lithium phosphate.

4. The hydrothermal synthesis method for nano lithium iron manganese phosphate according to claim 1, **characterized in that** the ferrous sulfate and the manganese sulfate are finished crystals or pre-crystallization liquids of ferrous sulfate and manganese sulfate.

5. The hydrothermal synthesis method for nano lithium iron manganese phosphate according to claim 1, **characterized in that** the lithium phosphate is obtained by neutralization of lithium hydroxide and phosphoric acid, or by recovery from the mother liquor.

6. The hydrothermal synthesis method for nano lithium iron manganese phosphate as claimed in claim 1, **characterized in that** in step (5), the lithium iron manganese phosphate powder is evenly mixed with the carbon source in a mass ratio of 100: (15-20).

7. The hydrothermal synthesis method for nano lithium iron manganese phosphate according to claim 1, **characterized in that** the carbon source is glucose.
